(19)

Europäisches Patentamt

European Patent Office

Office européen des brevets

(11) **EP 4 694 409 A1**

(12) **EUROPEAN PATENT APPLICATION**
published in accordance with Art. 153(4) EPC

(43) Date of publication:
**11.02.2026 Bulletin 2026/07**

(21) Application number: **24934820.2**

(22) Date of filing: **01.11.2024**

(51) International Patent Classification (IPC):
**H04W 56/00** (2009.01)

(52) Cooperative Patent Classification (CPC):
**H04W 56/00; H04W 68/00; H04W 72/044;
H04W 72/0446**

(86) International application number:
**PCT/CN2024/129464**

(87) International publication number:
**WO 2025/213756 (16.10.2025 Gazette 2025/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.04.2024 CN 202410447914**

(71) Applicant: **China Satellite Network Innovation
Co., Ltd
Beijing 100029 (CN)**

(72) Inventors:
• **WANG, Gaojian
Beijing 100029 (CN)**

• **MANG, Ge
Beijing 100029 (CN)**
• **MA, Dongjun
Beijing 100029 (CN)**
• **ZHANG, Lu
Beijing 100029 (CN)**
• **QI, Dongqing
Beijing 100029 (CN)**
• **WANG, Niwei
Beijing 100029 (CN)**
• **ZHANG, Yang
Beijing 100029 (CN)**

(74) Representative: **Novagraaf Technologies
Bâtiment O2
2, rue Sarah Bernhardt
CS90017
92665 Asnières-sur-Seine Cedex (FR)**

(54) **SYNCHRONIZATION SIGNAL BLOCK (SSB) EXPANSION METHOD, DEVICE, MEDIUM AND PROGRAM PRODUCT**

(57) Embodiments of the present disclosure provide a method for extending a synchronization signal block (SSB) and device, a medium and a program product, which are used for extending the number of SSBs and realizing coverage of more beam footprints. The method comprises: when the number of beam footprints that the satellite base station needs to serve is greater than the number of SSB beams sent in each SSB period, sending SSB beams to a current cell using K SSB sets, wherein the sum of the SSB beams contained in the K SSB sets is greater than the number of the beam footprints, and K is a natural number greater than 1; and transmitting the K SSB sets to the current cell, wherein beams with a same index in different SSB sets point to different beam footprints.

Fig. 2

When the number of beam footprints that the satellite base station needs to serve is greater than the number of SSB beams sent in each SSB period, sending SSB beams to a current cell using K SSB sets, wherein the sum of the SSB beams contained in the K SSB sets is greater than the number of the beam footprints, and K is a natural number greater than 1 — 201

transmitting the K SSB sets to the current cell, wherein beams with the same index in different SSB sets point to different beam footprints. — 202

EP 4 694 409 A1

## Description

### Cross-Reference to Related Application

The present disclosure claims benefit of priority to Chinese Patent Application No. 202410447914.6, filed with the Chinese Patent Office on April 12, 2024 and entitled "Method for Extending a Synchronization Signal Block (SSB) and Device, Medium and Program Product", which is incorporated herein by reference in its entirety.

### Technical Field

The present disclosure relates to the technical field of communications, and in particular, to a method for extending a synchronization signal block (SSB) and device, a medium and a program product.

### Background

A Synchronization Signal Block (SSB) is a broadcast beam introduced in a 5th Generation Mobile Communication Technology (5G) New Radio (NR) system, and is composed of a Primary Synchronization Signal (PSS), a Secondary Synchronization Signal (SSS) and a Physical Broadcast Channel (PBCH).

In 5G systems, on the one hand, beamforming may be employed to replace original wide beams with narrow beams, enabling precise alignment of radiation energy in both horizontal and vertical dimensions toward target users, thereby enhancing the coverage capability for common channels/control channels. On the other hand, the technical means of beam sweeping allows for the scanning and transmission of different SSB beams in a fixed period, achieving comprehensive cell coverage and improving area coverage efficiency.

In a 3rd Generation Partnership Project (3GPP) Non-Terrestrial Network (NTN), the transparent forwarding mode only requires consideration of local beam footprint coverage, allowing the continued use of existing 5G NR SSB beam design schemes. In the time domain, the number of slots available for transmitting synchronization signal blocks within a system half-frame is limited. Depending on the subcarrier spacing and frequency configuration, the maximum number of SSB transmissions per half-frame or per SSB period is 4, 8, or 64.

However, currently, the primary development direction of low earth orbit satellite communication systems is to provide global broadband access services for ground or low-altitude users. However, low earth orbit satellites are small in size, with limited platform resources (e.g., power constraints, restricted number of concurrent beams, etc.), and uneven distribution of ground traffic. These factors pose significant challenges to the design of satellite-to-ground access schemes that require full-area coverage. In existing technical solutions, the maximum number of SSBs in an SSB set is 4, 8, or 64, making it difficult to meet the requirement of thousands of beam footprints for full-area coverage.

### Summary

The present disclosure provides a method for extending a synchronization signal block (SSB) and device, a medium and a program product, which are used for extending the number of SSBs and realizing coverage of more beam footprints.

According to a first aspect, an embodiment of the present disclosure provides a method for extending a synchronization signal block (SSB), which is applied to a satellite base station. The method comprises:

when the number of beam footprints that the satellite base station needs to serve is greater than the number of SSB beams sent in each SSB period, sending SSB beams to a current cell using K SSB sets, wherein the sum of the SSB beams contained in the K SSB sets is greater than the number of the beam footprints, and K is a natural number greater than 1; and

transmitting the K SSB sets to the current cell, wherein beams with a same index in different SSB sets point to different beam footprints.

As an exemplary implementation, each SSB set of the K SSB sets contains a same number of SSB beams.

As an exemplary implementation, the method further comprises:
broadcasting the K as a scanning period extension coefficient to a terminal device.

As an exemplary implementation, the broadcasting the K as a scanning period extension coefficient to a terminal device comprises:
broadcasting the K as the scanning period extension coefficient to the terminal device via a system message SIB1 or a radio resource control (RRC) reconfiguration message.

As an exemplary implementation, the method further comprises:
when a multiplexing pattern between the SSB and a control resource set CORESETO is configured as multiplexing pattern 1, configuring an SSB scanning period to be greater than or equal to 20 milliseconds.

As an exemplary implementation, the method further comprises:
broadcasting the configured SSB scanning period to a terminal device via an SIB1 message or a RRC reconfiguration message.

As an exemplary implementation, in paging configuration parameters, K paging frames are configured as a paging frame group, wherein each paging frame of the K paging frames corresponds to at least one paging occasion, the number of monitoring occasions (MOs) configured in each paging occasion is the same as the number of SSB beams contained in one single SSB set, and the MOs correspond to the SSB beams on a one-to-one basis.

As an exemplary implementation, the method further comprises:

in paging configuration parameters, configuring each wakeup period with $N_{update}$ paging frames, wherein each of the paging frames corresponds to one paging occasion, each paging occasion (PO) comprises K search spaces, the number of MOs configured in each of the search spaces is the same as the number of SSB beams contained in one single SSB set, and an $(x*S+M)^{th}$ physical downlink control channel (PDCCH) MO for paging located in a $k^{th}$ search space in one PO corresponds to an $M^{th}$ transmitted SSB;

wherein $N_{update} = \frac{N}{K}$, N is the total number of paging frames in one pre-configured wakeup period, k represents a position where an SSB beam corresponding to a terminal device is located in the K SSB sets, X is the number of MOs mapped to one SSB, x is a natural number between [0, X-1], S is the number of SSB beams contained in one SSB set, and M is a natural number between [1, S].

As an exemplary implementation, the method further comprises:
broadcasting the paging configuration parameters to the terminal device via an SIB1 message or a RRC reconfiguration message.

According to a second aspect, an embodiment of the present disclosure provides a method for extending a synchronization signal block (SSB), which is applied to a terminal device. The method comprises:

after establishing a connection with a satellite base station, receiving a scanning period extension coefficient K broadcasted by the satellite base station;

determining a new SSB scanning period based on a current SSB scanning period and the scanning period extension coefficient K; and

scanning SSB beams using the new SSB scanning period.

As an exemplary implementation, receiving a scanning period extension coefficient K broadcasted by the satellite base station comprises:
receiving the scanning period extension coefficient K broadcasted by the satellite base station via an SIB1 message or a RRC reconfiguration message.

As an exemplary implementation, the method further comprises:

before establishing the connection with the satellite base station, determining a target SSB scanning period based on a pre-configured target scanning period extension coefficient and an initial SSB scanning period; and

scanning SSB beams using the target SSB scanning period to determine an initial SSB.

As an exemplary implementation, the target scanning period extension coefficient is a maximum value within at least one pre-configured scanning period extension coefficient.

As an exemplary implementation, the current SSB scanning period is determined according to an SIB1 message or a RRC reconfiguration message broadcasted by the satellite base station.

As an exemplary implementation, the method further comprises:
receiving paging configuration parameters broadcasted by the satellite base station via an SIB1 message or a RRC reconfiguration message.

As an exemplary implementation, the method further comprises:

based on the paging configuration parameters, determining a system frame number (SFN) of a starting radio frame SFN of a paging frame group where the terminal device is located by means of formula I, wherein a paging frame of the terminal device corresponds to a $k^{th}$ paging frame in the paging frame group, the position of the $k^{th}$ paging frame is determined by means of formula II, and an MO of the terminal device is a PDCCH MO corresponding to an $I^{th}$ SSB in a paging occasion corresponding to the $k^{th}$ paging frame;

$$(SFN + PF\_offset) \bmod T = \left(T \ div \ N_{update}\right) \times \left(UE\_ID \ mod \ N_{update}\right) \qquad \text{formula I}$$

$$SFN_k = SFN + k \times \frac{T}{N_{update} \times K} \qquad \text{formula II}$$

wherein T is a wakeup period of the terminal device, $N_{update} = \frac{N}{K}$, N is the total number of paging frames in one pre-configured wakeup period, K is a scanning period extension coefficient, k represents a position where an SSB beam corresponding to the terminal device is located in K SSB sets, UE_ID is an identity identifier of the terminal device, *PF_offset* is an offset of a paging frame (PF), and I represents a position where an SSB beam corresponding to the terminal device is located in a $k^{th}$ SSB set.

As an exemplary implementation, the method further comprises:

based on the paging configuration parameters, determining a SFN of a starting radio frame of a paging frame where the terminal device is located by means of formula III, wherein an MO of the terminal device is a PDCCH MO corresponding to an $I^{th}$ SSB in a $k^{th}$ search space:

$$(SFN + PF\_offset) \bmod T = \left(T \ div \ N_{update}\right) \times \left(UE\_ID \ mod \ N_{update}\right) \qquad \text{formula III}$$

wherein T is a wakeup period of the terminal device, $N_{update} = \frac{N}{K}$, N is the total number of paging frames in one pre-configured wakeup period, K is a scanning period extension coefficient, k represents a position where an SSB beam corresponding to the terminal device is located in K SSB sets, UE_ID is an identity identifier of the terminal device, *PF_offset* is an offset of a paging frame (PF), and I represents a position where an SSB beam corresponding to the terminal device is located in a $k^{th}$ SSB set.

According to a third aspect, an embodiment of the present disclosure further provides an apparatus for extending a synchronization signal block (SSB), comprising:

a configuration unit, configured to, when the number of beam footprints that the satellite base station needs to serve is greater than the number of SSB beams sent in each SSB period, send SSB beams to a current cell using K SSB sets, wherein the sum of the SSB beams contained in the K SSB sets is greater than the number of the beam footprints, and K is a natural number greater than 1; and

a transmitting unit, configured to transmit the K SSB sets to the current cell, wherein beams with the same index in different SSB sets point to different beam footprints.

As an exemplary implementation, each SSB set of the K SSB sets contains a same number of SSB beams.
As an exemplary implementation, the transmitting unit is further configured to:
broadcast the K as a scanning period extension coefficient to a terminal device.
As an exemplary implementation, the transmitting unit is specifically configured to:
broadcast the K as the scanning period extension coefficient to the terminal device via a system message SIB1 or a radio resource control (RRC) reconfiguration message.
As an exemplary implementation, the configuration unit is further configured to:
when a multiplexing pattern between the synchronization signal block and a control resource set CORESET0 is configured as multiplexing pattern 1, configure an SSB scanning period to be greater than or equal to 20 milliseconds.
As an exemplary implementation, the transmitting unit is further configured to:
broadcast the configured SSB scanning period to a terminal device via an SIB1 message or a RRC reconfiguration message.

As an exemplary implementation, the configuration unit is further configured to:
in paging configuration parameters, K paging frames are configured as a paging frame group, wherein each paging frame of the K paging frames corresponds to at least one paging occasion, the number of monitoring occasions (MO) configured in each paging occasion is the same as the number of SSB beams contained in one single SSB set, and the MOs correspond to the SSB beams on a one-to-one basis.

As an exemplary implementation, the configuration unit is further configured to:

in paging configuration parameters, configure each wakeup period with $N_{update}$ paging frames, wherein each of the paging frames corresponds to one paging occasion, each paging occasion (PO) comprises K search spaces, the number of MOs configured in each of search the spaces is the same as the number of SSB beams contained in one single SSB set, and an $(x*S+M)^{th}$ physical downlink control channel (PDCCH) MO for paging located in a $k^{th}$ search space in one PO corresponds to an $M^{th}$ transmitted SSB;

wherein $N_{update} = \frac{N}{K}$, N is the total number of paging frames in one pre-configured wakeup period, k represents a position where an SSB beam corresponding to a terminal device is located in the K SSB sets, X is the number of MOs mapped to one SSB, x is a natural number between [0, X-1], S is the number of SSB beams contained in one SSB set, and M is a natural number between [1, S].

As an exemplary implementation, the transmitting unit is further configured to:
broadcast the paging configuration parameters to the terminal device via an SIB1 message or a RRC reconfiguration message.

According to a fourth aspect, an embodiment of the present disclosure provides an apparatus for extending a synchronization signal block (SSB), which is applied to a terminal device. The apparatus comprises:

a receiving unit, configured to, after establishing a connection with a satellite base station, receive a scanning period extension coefficient K broadcasted by the satellite base station;

a processing unit, configured to determine a new SSB scanning period based on a current SSB scanning period and the scanning period extension coefficient K; and

a scanning unit, configured to scan SSB beams using the new SSB scanning period.

As an exemplary implementation, the receiving unit is specifically configured to:
receive the scanning period extension coefficient K broadcasted by the satellite base station via an SIB1 message or a RRC reconfiguration message.

As an exemplary implementation, the processing unit is further configured to:

before establishing the connection with the satellite base station, determine a target SSB scanning period based on a pre-configured target scanning period extension coefficient and an initial SSB scanning period; and

the scanning unit is further configured to scan SSB beams using the target SSB scanning period to determine an initial SSB.

As an exemplary implementation, the target scanning period extension coefficient is a maximum value within at least one pre-configured scanning period extension coefficient.

As an exemplary implementation, the current SSB scanning period is determined according to an SIB1 message or a RRC reconfiguration message broadcasted by the satellite base station.

As an exemplary implementation, the receiving unit is further configured to:
receive paging configuration parameters broadcasted by the satellite base station via an SIB1 message or a RRC reconfiguration message.

As an exemplary implementation, the processing unit is further configured to:

based on the paging configuration parameters, determine a system frame number (SFN) of a starting radio frame SFN of a paging frame group where the terminal device is located by means of formula I, wherein a paging frame of the terminal device corresponds to a $k^{th}$ paging frame in the paging frame group, the position of the $k^{th}$ paging frame is determined by means of formula II, and an MO of the terminal device is a PDCCH MO corresponding to an $I^{th}$ SSB in a paging occasion corresponding to the $k^{th}$ paging frame;

$$(SFN + PF\_offset) \bmod T = \left(T \; div \; N_{update}\right) \times \left(UE\_ID \bmod N_{update}\right) \qquad \text{formula I}$$

$$SFN_k = SFN + k \times \frac{T}{N_{update} \times K} \qquad \text{formula II}$$

wherein T is a wakeup period of the terminal device, $N_{update} = \frac{N}{K}$, N is the total number of paging frames in one pre-configured wakeup period, K is a scanning period extension coefficient, k represents a position where an SSB beam corresponding to the terminal device is located in K SSB sets, UE_ID is an identity identifier of the terminal device, *PF_offset* is an offset of a paging frame (PF), and I represents a position where an SSB beam corresponding to the terminal device is located in a $k^{th}$ SSB set.

As an exemplary implementation, the processing unit is further configured to:

based on the paging configuration parameters, determine a SFN of a starting radio frame of a paging frame where the terminal device is located by means of formula III, wherein an MO of the terminal device is a PDCCH MO corresponding to an $I^{th}$ SSB in a $k^{th}$ search space:

$$(SFN + PF\_offset) \bmod T = \left(T \; div \; N_{update}\right) \times \left(UE\_ID \bmod N_{update}\right) \qquad \text{formula III}$$

wherein T is a wakeup period of the terminal device, $N_{update} = \frac{N}{K}$, N is the total number of paging frames in one pre-configured wakeup period, K is a scanning period extension coefficient, k represents a position where an SSB beam corresponding to the terminal device is located in K SSB sets, UE_ID is an identity identifier of the terminal device, *PF_offset* is an offset of a paging frame (PF), and I represents a position where an SSB beam corresponding to the terminal device is located in a $k^{th}$ SSB set.

According to a fifth aspect, an embodiment of the present disclosure provides a device for extending a synchronization signal block (SSB). The device comprises a processor and a memory, wherein the memory is configured to store a program executable by the processor, and the processor is configured to read the program in the memory and execute the steps of the method according to any one of the first aspect or the second aspect.

According to a sixth aspect, an embodiment of the present disclosure further provides a computer storage medium, storing a computer program, wherein when the computer program is executed by a processor, the steps of the method according to any one of the first aspect or the second aspect are implemented.

In a seventh aspect, the present disclosure provides a computer program product. The computer program product comprises: a computer program code, wherein the steps of the method according to any one of the first aspect or the second aspect are executed by a computer when the computer program code runs on the computer.

These and other aspects of the present disclosure will become more apparent from the following description of the embodiments.

**Brief Description of the Drawings**

To describe the technical solutions in the embodiments of the present disclosure more clearly, the following briefly introduces the drawings required for description in the embodiments. Apparently, the drawings in the following description show merely some embodiments of the present disclosure, and a person of ordinary skill in the art may still derive other drawings from these drawings without inventive efforts.

Fig. 1 is a schematic diagram of a principle for a method for extending a synchronization signal block (SSB) according to an embodiment of the present disclosure;

Fig. 2 is a schematic flowchart of a method for extending a synchronization signal block (SSB) according to an embodiment of the present disclosure;

Fig. 3 is a schematic diagram of a principle for a method for determining monitoring slots according to an embodiment of the present disclosure;

Fig. 4 is a schematic diagram of a principle for configuring time domain positions of PDCCH MOs corresponding to a terminal device according to an embodiment of the present disclosure;

Fig. 5 is a schematic diagram of another principle for configuring time domain positions of PDCCH MOs corresponding to a terminal device according to an embodiment of the present disclosure;

Fig. 6 is a schematic flowchart of another method for extending a synchronization signal block (SSB) according to an embodiment of the present disclosure;

Fig. 7 is a schematic diagram of an apparatus for extending a synchronization signal block (SSB) according to an embodiment of the present disclosure;

Fig. 8 is a schematic diagram of another apparatus for extending a synchronization signal block (SSB) according to an embodiment of the present disclosure;

Fig. 9 is a schematic diagram of a device for extending a synchronous signal block (SSB) according to an embodiment of the present disclosure; and

Fig. 10 is a schematic diagram of another device for extending a synchronization signal block (SSB) according to an embodiment of the present disclosure.

## Detailed Description of the Embodiments

To make the objectives, technical solutions and advantages of the present disclosure clearer, the present disclosure will be further described in detail below with reference to the drawings. Apparently, the described embodiments are merely some rather than all of the embodiments of the present disclosure. All other embodiments obtained by a person of ordinary skill in the art based on the embodiments of the present disclosure without inventive efforts shall belong to the scope of protection of the present disclosure.

The term "and/or" in the embodiments of the present disclosure describes an association relationship between associated objects, and indicates that three relationships may exist. For example, A and/or B may indicate three cases: A exists alone, A and B exist simultaneously, and B exists alone. The character "/" generally indicates an "or" relationship between the preceding and succeeding associated objects.

The application scenario described in the embodiments of the present disclosure is intended to describe the technical solutions of the embodiments of the present disclosure more clearly, which does not constitute a limitation to the technical solutions provided in the embodiments of the present disclosure. A person of ordinary skill in the art may know that, with the appearance of new application scenarios, the technical solutions provided in the embodiments of the present disclosure are applicable to similar technical problems. In the description of the present disclosure, "a plurality of" means two or more than two, unless specified otherwise.

Before the method for extending a synchronization signal block (SSB) provided in the embodiments of the present disclosure is described, the technical background of the embodiments of the present disclosure is first described in detail for ease of understanding.

An SSB is a broadcast beam introduced in a 5th Generation Mobile Communication Technology (5G) New Radio (NR) system, and is composed of PSS, SSS and PBCH.

In 5G systems, on the one hand, beamforming may be employed to replace original wide beams with narrow beams, enabling precise alignment of radiation energy in both horizontal and vertical dimensions toward target users, thereby enhancing the coverage capability for common channels/control channels. On the other hand, the technical means of beam sweeping allows for the scanning and transmission of different SSB beams in a fixed period, achieving comprehensive cell coverage and improving area coverage efficiency.

In 3GPP NTN, the transparent forwarding mode only requires consideration of local beam footprint coverage, allowing the continued use of existing 5G NR SSB beam design schemes. In the time domain, the number of slots available for transmitting synchronization signal blocks within a system half-frame is limited. Depending on the subcarrier spacing and frequency configuration, the maximum number of SSB transmissions per half-frame or per SSB period is 4, 8, or 64. Specifically, in NR, there are many different time domain patterns for SSB transmission, the SSB transmission in an SSB period is limited to a half-frame window of 5 milliseconds (ms), and for a frequency range below 3 gigahertz (GHz), the maximum number of SSBs in an SSB set is 4; when the frequency ranges from 3 GHz to 6 GHz, the maximum number of SSBs in an SSB set is 8; when the frequency ranges from 6 GHz to 52.6 GHz, the maximum number of SSBs in an SSB set is 64 to achieve a trade-off between coverage and resource overhead. It may be seen that the maximal number of SSBs in an SSB set in existing technical solutions is 4, 8, or 64, that is, the maximal number of SSBs in a period may only cover 4, 8, or 64 beam footprints by scanning.

However, currently, the primary development direction of low earth orbit satellite communication systems is to provide global broadband access services for ground or low-altitude users. However, low earth orbit satellites are small in size, with limited platform resources (e.g., power constraints, restricted number of concurrent beams, etc.), and uneven distribution of ground traffic. These factors pose significant challenges to the design of satellite-to-ground access schemes that require full-area coverage. In existing technical solutions, the maximum number of SSBs in an SSB set is 4, 8, or 64, making it difficult to meet the requirement of thousands of beam footprints for full-area coverage.

In view of this, the embodiments of the present disclosure provide a method for extending a synchronization signal block (SSB) and device, a medium and a program product. For a satellite base station side, when the number of beam footprints that the satellite base station needs to serve is greater than the number of SSB beams sent in each SSB period, SSB beams are sent to a current cell using K SSB sets, wherein the sum of the SSB beams contained in the K SSB sets is greater than the number of the beam footprints, and it is ensured that beams with a same index in different SSB sets point to different beam footprints. In this way, by extending the number of SSBs equivalently across SSB periods, it is possible to cover more beam footprints without modifying the time-domain resources for SSB transmission or the maximum number of SSBs per half-frame window as defined in the current 3GPP 5G NR protocol.

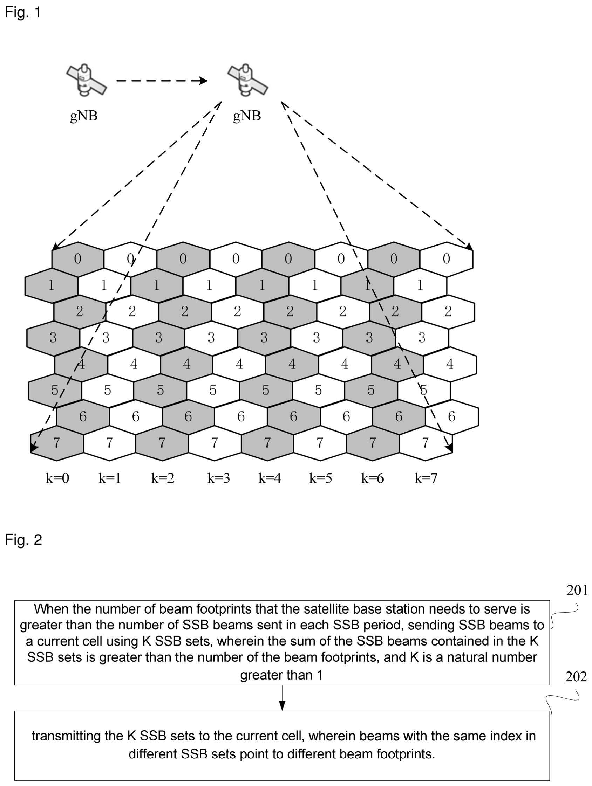

After the technical background of the embodiments of the present disclosure is introduced, the inventive concept of the SSB extension scheme provided in the embodiments of the present disclosure will be described in detail below with reference to Fig. 1.

The method for extending an SSB provided in the embodiments of the present disclosure equivalently extends or increases the number of SSBs by extending the SSB scanning period of a terminal device. That is, from the perspective of the terminal device, the SSB scanning period is extended to an integer multiple of the original SSB scanning period. From the perspective of the satellite base station, the SSB sets remain unchanged, but beams with the same index in different SSB sets point to different ground beam footprints until all beam footprints in the cell are covered.

As shown in Fig. 1, the satellite base station (gNodeB, gNB) needs to cover 64 beam footprints in the current cell, meaning that there are 64 beam footprints within the coverage of the current cell. Taking an SSB time domain pattern case C as an example when the subcarrier spacing is 30 KHz and the frequency ranges from 3 GHz to 6 GHz, each SSB period contains 8 SSBs having corresponding SSB indices 0-7 and distributed in the first half frame of each SSB period in the time domain.

In the embodiments of the present disclosure, an SSB scanning period of a terminal device is extended to 8 existing SSB periods. The 8 corresponding beams in each SSB period serve 8 different beam footprints respectively. With 64 SSBs in 8 periods, covering of 64 beam footprints and broadcasting of synchronization signal blocks are completed in time division and space division. For a terminal device at a certain beam footprint, it may uniquely specify the corresponding SSB beam by indexing the $k^{th}$ period and the $l^{th}$ (lower case of L) beam in the period.

After the inventive concept of the embodiments of the present disclosure is introduced, the following describes in detail method for extending an SSB provided in the embodiments of the present disclosure with reference to specific embodiments.

As shown in Fig. 2, this embodiment provides a method for extending a synchronization signal block (SSB). When the method is applied to a satellite base station, the implementation flow is as follows:

Step 201: when the number of beam footprints that the satellite base station needs to serve is greater than the number of SSB beams sent in each SSB period, sending SSB beams to a current cell using K SSB sets, wherein the sum of the SSB beams contained in the K SSB sets is greater than the number of the beam footprints, and K is a natural number greater than 1.

It should be noted that the number of beam footprints that the satellite base station needs to serve is usually less than or equal to the total number of beam footprints covered by the satellite base station. For example, in practical applications, if the satellite base station only needs to scan beam footprints in some areas within coverage according to the configuration of the satellite base station, the beam footprints in some areas are the beam footprints needing to be served by the satellite base station.

During specific implementation, the number of beam footprints that the satellite base station needs to serve may be acquired from a configuration parameter of the base station or the cell, or may be determined in a manner in the related art, which is not limited in the embodiments of the present disclosure.

During specific implementation, when the number of beam footprints that the satellite base station needs to serve is greater than the number of SSB beams sent in each SSB period, K SSB sets are configured, and the sum of the SSB beams contained in the K SSB sets is greater than the number of beam footprints that the satellite base station needs to serve. Of course, if the number of beam footprints that the satellite base station needs to serve is less than or equal to the number of the SSB beams sent in each half-frame window in the current SSB transmission time-domain pattern, one SSB set is configured, that is, K is equal to 1. The SSB set refers to a set of SSB beams sent in each SSB period.

It should be noted that, the number of the SSB beams contained in each SSB set of K SSB sets may be the same. For example, when the number of beam footprints that the satellite base station needs to serve is 90 and the maximum number of the SSB beams sent in each SSB period is 64, 2 SSB sets may be configured, and each SSB set contains 45 SSB beams. In other embodiments of the present disclosure, the number of the SSB beams contained in each SSB set of K SSB sets may be the same or different. It is still assumed that the number of beam footprints that the satellite base station needs to serve is 90 and the maximum number of the SSB beams sent in each SSB period is 64, 2 SSB sets may be configured, with one SSB set containing 50 SSB beams, and the other SSB set containing 40 SSB beams.

The following explains how to determine K by taking the case where each SSB set of K SSB sets contains the same number of SSB beams as an example.

It is assumed that in a cell, the number of beam footprints that the satellite base station needs to serve is $N_b$, in the case where a specific frequency band and a subcarrier are determined (i.e. in the case where the time domain pattern CaseX for SSB transmission is explicit), the maximum number of SSBs that may be sent in each SSB period (or each half-frame window) is $L_{max}$, wherein $N_b > L_{max}$. At this time, in order to cover the beam footprints needing to be served, K SSB sets need to be configured, where K may be calculated by the following formula (1):

$$K = \left\lceil \frac{N_b}{L_{max}} \right\rceil \qquad (1)$$

In an equivalent extended period, there are $K * L_{max}$ valid SSB beams for a Frequency Division Duplexing (FDD) system.

In practical applications, in consideration of resource overhead, there may not be enough resources in a half-frame period to complete the transmission of $L_{max}$ beams. Meanwhile, for a Time Division Duplexing (TDD) system, a large transmission delay in a satellite communication system results in long Guard Period (GP) slots, and there is generally not enough downlink time domain resources in each SSB period to complete the scanning of $L_{max}$ beams.

Therefore, in the embodiments of the present disclosure, L is defined as the number of beams actually sent in each SSB period after comprehensively considering the balance between coverage and resource overhead. The same SSB extension scheme is applied to both FDD and TDD configurations. It should be noted that, in the same SSB period, the numbers of beams that may be actually sent in the FDD configuration and the TDD configuration are different (because the TDD downlink slot resources are less than those in the FDD system). Therefore, when the same number of beam footprints is covered, more SSB periods need to be extended in the TDD configuration.

On the basis of the modified number of beams actually sent in each SSB period, K is modified to the following formula (2) to ensure coverage of beam footprints needing to be served:

$$K = \left\lceil \frac{N_b}{L} \right\rceil \qquad (2)$$

It should be noted that, in other embodiments of the present disclosure, in consideration of the number L of actual SSB beams sent in each SSB period in practical applications being less than $L_{max}$, when $N_b > L$, that is, when the number of beam footprints that the satellite base station needs to serve is greater than the number of SSB beams that may be actually sent in each SSB period, K SSB sets need to be configured, and it is ensured that the sum of the SSB beams contained in the K SSB sets is greater than the number of beam footprints that the satellite base station needs to serve.

K may also be referred to as an SSB scanning period extension coefficient of a terminal device. In other words, the SSB scanning period of the terminal device needs to be extended to K times of the original SSB scanning period. In the entire extended scanning period of the terminal device, there are $K * L_{max}$ valid SSB beam transmission occasions, but $K * L$ beams are actually transmitted.

During specific implementation, an existing information element ssb-PositionsInBurst in the 3GPP 5G NR protocol may be used to indicate which time domain beam footprint is sent by the satellite base station in K SSB periods. Without extending the bit length of ssb-PositionsInBurst, the same bitmap is used in the K SSB periods, wherein L bits are set to 1 to represents the transmission of corresponding L SSBs.

Step 202: transmitting the K SSB sets to the current cell, wherein beams with the same index in different SSB sets point to different beam footprints.

During specific implementation, in the embodiments of the present disclosure, when the K SSB sets are transmitted to the current cell, the configuration related to an SSB period is not changed, for example, the length of the SSB period, the time-frequency domain position of the SSB, etc. Beam corresponding to each SSB in extended periods of the satellite base station covers beam footprints at different positions, that is, in different SSB periods, beams with the same index point to beam footprints at different positions.

During specific implementation, the satellite base station may further broadcast K as a scanning period extension coefficient to the terminal device, so as to instruct the terminal device to extend its SSB scanning period K times.

During specific implementation, when K is broadcast as a scanning period extension coefficient to the terminal device, K may be broadcast as the scanning period extension coefficient to the terminal device via SystemInformation-BlockType1 (SIB1) or a Radio Resource Control (RRC) reconfiguration message.

For the terminal device, the determination of its SSB scanning period may be categorized into the following two cases:

Before a connection is established between the terminal device and the satellite base station, that is, before the terminal device receives SIB1 message, the SSB scanning period of the terminal device is a pre-configured initial SSB scanning period, for example, the initial SSB scanning period is 20 ms.

After a connection is established between the terminal device and the satellite base station, the SSB scanning period of the terminal device is determined according to an SIB1 message or a RRC reconfiguration message broadcasted by the satellite base station.

In this way, a terminal device located at a certain beam footprint in the current cell needs to scan for initial beam selection in an extended SSB period, and selects a strongest SSB beam pointing to the current beam footprint by means of relevant criteria (e.g., based on Reference Signal Receiving Power (RSRP), etc.).

Likewise, the paging occasion, random access occasion, etc. related to the SSB configuration need to be designed adaptively. For example, if the strongest beam is located in the $k^{th}$ SSB period, the relevant occasion corresponding to the $k^{th}$ period is adopted for operations related to the SSB such as random access occasion or paging occasion.

Specifically, in the existing 3GPP 5G protocol, the detailed information of the SSB (e.g., period, actual transmitted SSB bitmap, etc.) is notified to the terminal device via an SIB1 message or a RRC reconfiguration message. At least the following two information elements are included:

ssb-PositionsInBurst: indicating the time-domain positions of the transmitted SSBs in an SSB period (in SSB set within the half-frame window). The first bit or the leftmost bit corresponds to the SSB index 0, the second bit corresponds to the SSB index 1, and so on. If the value in the bitmap is 0, it indicates that the corresponding SSB is not transmitted; if the value is 1, it indicates that the corresponding SSB is transmitted.

ssb-periodicityServingCell: an SSB period (in milliseconds) used for the purpose of rate matching, i.e. the half-frame period during which the SSB set is sent. Possible values of the SSB period defined in the existing 3GPP NR are 5 ms, 10 ms, 20 ms, 40 ms, 80 ms, or 160 ms. Regardless of the length of the SSB period, the SSB set in each SSB period is confined to a 5 ms window. If the field does not exist, the default SSB period of the terminal device is 5 ms.

The described two information elements are defined in ServingCellConfigCommon and ServingCellConfig-CommonSIB. The actual SSB scanning period extension coefficient K of the terminal device may also be defined in a similar manner. For example, it is defined in ServingCellConfigCommon and ServingCellConfigCommonSIB that an information element "ssb-PeriodCoeff" is indicated and broadcast to the terminal device. The specific explanation is as follows:

ssb-PeriodCoeff: an actual SSB scanning period extension coefficient of a UE, i.e. the parameter K mentioned in the embodiments of the present disclosure. If taking milliseconds (ms) as a unit, the SSB scanning period of the terminal device is extended to m=ssb-PeriodCoeff * ssb-periodicityServingCell milliseconds. It indicates how many SSB periods the SSB scanning period of the terminal device may span. In a period of m milliseconds, there is only one SSB beam pointing to the beam footprint where the terminal device is located, and it is assumed to correspond to the $l^{th}$ SSB beam in the $k^{th}$ SSB period, where $k \in [1, ..., K]$, $l \in [1, ..., L_{max}]$. Thus, $(k,1)$ may uniquely represent an SSB in the entire extended SSB period.

In the initial downlink synchronization process, before the terminal device receives the SIB1 message, the default SSB period is 20 ms, and the default extended SSB period is the maximum value defined by the information element "ssb-PeriodCoeff", which may be defined as an integer value such as 8, 16, or 32.

In practical applications, a larger SSB period extension coefficient K results in a longer actual SSB scanning period of the terminal device, consequently increasing the average access delay, switching delay, paging delay and the like. If the number of beam footprints that may be covered by a single cell is larger, that is, the coverage is larger, a balance between the coverage rate and the access delay needs to be considered comprehensively during actual network deployment, so as to select a specific value of K.

It should be noted that, in the described method of notifying the terminal device of the SSB period extension coefficient by definition via an information element, the definition of the information element ssb-PeriodCoeff is a definition at a cell level, and applies uniformly to all terminal devices in the cell. The described method is only an exemplary solution for definition. The present disclosure does not limit the specific definition method for the specific SSB period extension coefficient in the protocol. For example, the SSB period extension coefficient may also be broadcast implicitly by reuse of high-order bits in the frame number.

The terminal device may directly calculate the position, i.e. index k, of the current SSB period where the terminal device is located in the extended SSB period by means of the information element ssb-PeriodCoeff, the index of the strongest received SSB beam and the system frame number. In the subsequent access and paging schemes, the terminal device only needs to pay attention to the access occasions, paging occasions and the like within the SSB period in which the terminal device itself is located or related to SSBs (i.e. (k,1)) in the SSB period in which the terminal device itself is located.

The following describes, with reference to specific embodiments, the impact of the synchronization signal block (SSB) extension scheme provided in the embodiments of the present disclosure on the flows in existing communication systems that utilize SSBs or are related to SSB transmission.

I. Impact on downlink time-frequency synchronization

In an existing system, in an initial downlink time-frequency synchronization process, a default SSB period of a terminal device is 20 ms. After extending the SSB scanning period, the impact on the system may be considered in two aspects (taking the SSB period of 20 ms as an example):

From the perspective of the satellite base station, the SSB period is still 20 ms, but the satellite base station scans different beam footprints in different SSB periods, and after K SSB periods end, it starts again from the first beam footprint.

From the perspective of the terminal device, the SSB scanning period is extended K times, that is, only one beam will scan the beam footprint of the terminal device in K SSB periods. From the perspective of the initial cell search development and implementation of the terminal device, the terminal device may still use the processing capability based on the existing default SSB period of 20 ms, but it needs to handle K periods. Therefore, the access delay of the terminal device increases due to the extension of the SSB scanning period.

II. Impact on time domain configuration of SIB1

In Chapter 13 of the protocol 38.213, mapping tables between monitoring occasions of Type0-PDCCH and searchSpaceZero information are defined, that is, tables 13-11 to 13-15A.

When a multiplexing pattern between SSB and CORESET0 is multiplexing pattern 1, the terminal device monitors Type0-PDCCH in two consecutive slots. The two consecutive slots serve as a monitoring window containing Type0-PDCCH monitoring occasions, the number of the starting slot thereof is $n_0$, the period of the monitoring window is 20 ms, and in each period, each SSB with index i corresponds to a Type0-PDCCH monitoring window, and the number $n_0$ of the starting slot of the monitoring window is determined by means of the following formula (3):

$$n_0 = (O \cdot 2^\mu + \lfloor i \cdot M \rfloor) \bmod N_{slot}^{frame,\mu} \qquad (3)$$

wherein, $N_{slot}^{frame,\mu}$ is the number of slots in a radio frame, and M and O may be obtained according to the searchSpaceZero information and the monitoring occasions of PDCCH and the searchSpaceZero information in Chapter 13 of the protocol 38.213. The least significant 4 bits of the pdcch-ConfigSIB1 information field carried in the PBCH are used to indicate the searchSpaceZero information. These 4 bits indicate an index in Tables 13-11 to 13-12. After determining the slot number $n_0$, the radio frame number $SFN_C$ where the monitoring window is located further needs to be determined.

For a radio frame number $SFN_C$, it is defined in protocol 38.213 as follows:

when

$$\left\lfloor (O \cdot 2^\mu + \lfloor i \cdot M \rfloor)/N_{slot}^{frame,\mu} \right\rfloor \bmod 2 = 0, \ SFN_c \bmod 2 = 0;$$

when

$$\left\lfloor (O \cdot 2^\mu + \lfloor i \cdot M \rfloor)/N_{slot}^{frame,\mu} \right\rfloor \bmod 2 = 1, \ SFN_c \bmod 2 = 1.$$

That is, when the number of slots obtained by calculation according to $(O \cdot 2^\mu + \lfloor i \cdot M \rfloor)$ is less than the number of slots contained in a radio frame, $SFN_C$ is an even-numbered radio frame; otherwise, it is an odd-numbered radio frame.

When a multiplexing pattern between SSB and CORESETO is multiplexing pattern 2 or 3, the terminal device monitors Type0-PDCCH in one slot, and the period of the monitoring slot is equal to the SSB period. In each monitoring period, the monitoring slot number $n_C$ and radio frame number $SFN_C$ corresponding to the SSB with index i are related to the radio frame and slot where the SSB is located, forming a one-to-one correspondence relationship, which may be determined from the mapping tables 13-13 to 13-15 between the monitoring occasions and the searchSpaceZero information.

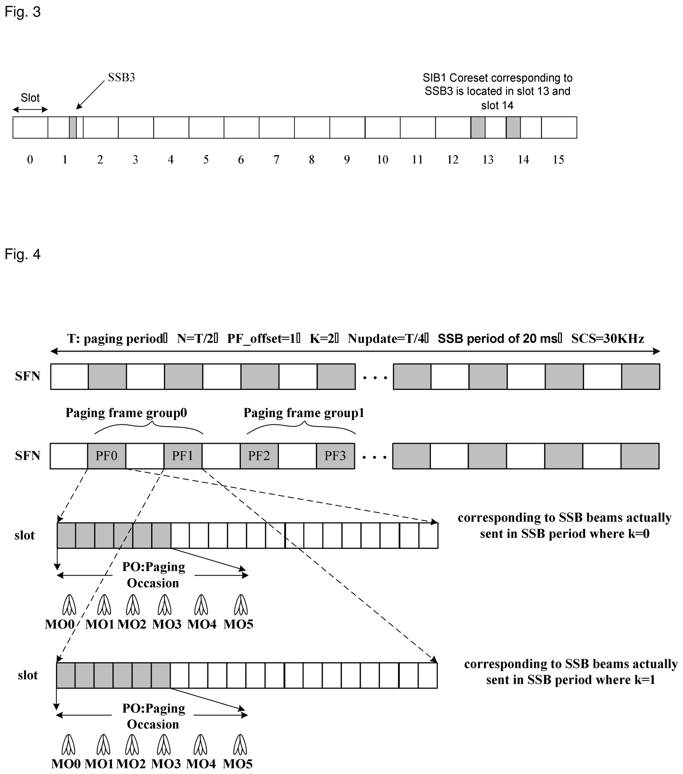

Taking Table 13-11 corresponding to FR1 as an example, as shown in Table 1 below, if the index is 4, the SSB index is 3, the subcarrier spacing is 30 KHz, and O = 5 and M = 1 may be determined at this time by table lookup. $n_0 = 13$ may be obtained by calculation according to the formula, $SFN_C$ is an even-numbered frame, and the monitoring slots are 13 and 14, as shown in Fig. 3.

Table 1

| index | O | number of search spaces per slot | M | first index number |
|---|---|---|---|---|
| 4 | 5 | 1 | 1 | 0 |

After the SSB scanning period is extended, the impact on the SIB1 monitoring slots is as follows:
When a multiplexing pattern between SSB and CORESETO is multiplexing pattern 1, the period of the SIB1 is 20 ms, and if the SSB period is greater than or equal to 20 ms, the SIB1 monitoring occasions in the SSB period are sufficient (on average, it may be considered that one SSB corresponds to a plurality of monitoring occasions).

From the perspective of the satellite base station, the beam footprint pointed to by SIB1 when broadcast in each SSB period aligns with the corresponding SSB beam in that period. That is, in K different SSB periods, information broadcasted by SIB1 remains unchanged, but beam directions are different. If the SSB period is less than 20 ms, the SIB1 monitoring occasions cannot correspond to the SSB beams on a one-to-one basis in 20 ms. For example, when the SSB period is 5 ms, 4 SSBs with the same index in 20 ms correspond to 2 monitoring slots. If 4 SSB beams with the same index point to different beam footprints, the four different beam footprints cannot obtain the monitoring slots with equal opportunity. Therefore, when the SSB scanning period is extended, the SSB period needs to be configured to be greater than or equal to 20 ms. The calculation of the slot number $n_0$ and the radio frame number $SFN_C$ does not need to be adjusted.

From the perspective of the terminal device, in every K SSB periods, the terminal device only needs to monitor the SIB1 monitoring occasion corresponding to the $l^{th}$ SSB beam (the SSB beam corresponding to the beam footprint where the terminal device is located) in the $k^{th}$ SSB period.

When a multiplexing pattern between SSB and CORESETO is multiplexing pattern 2 or multiplexing pattern 3, the period of the monitoring slot of CORESETO is equal to and corresponds to the SSB period on a one-to-one basis. Therefore, from the perspective of the satellite base station, the beam footprint pointed to by SIB1 when broadcast in each SSB period shall align with the corresponding SSB beam in that period. From the perspective of the terminal device, in every K SSB periods, the terminal device only needs to monitor the SIB1 monitoring occasion corresponding to the $l^{th}$ SSB beam (the SSB beam corresponding to the beam footprint where the terminal device is located) in the $k^{th}$ SSB period, which is the same as the case of multiplexing pattern 1.

In conclusion, after the SSB scanning period is extended (i.e. K > 1), there is no impact on SIB1 timing. It is only necessary to specify that when a multiplexing pattern between the SSB and the control resource set CORESETO is configured as multiplexing pattern 1, the SSB scanning period of the terminal device is configured to be greater than or equal to 20 milliseconds via an SIB1 message.

III. Impact on random access occasions

In NR, only when an SSB beam scanning signal covers the beam footprint where the terminal device is located, the terminal device has an opportunity to send a Physical Random Access Channel (PRACH) for random access, that is, a mapping relationship needs to be established between a PRACH sending moment or access occasion (PRACH occasion, RO) and an SSB index.

In order to map each actually sent SSB to at least one RO, in addition to a PRACH configuration period (i.e. x in Table 6.3.3.2-2 to Table 6.3.3.2-4 of the protocol 38.211), the concept of an association period is also defined, one association period is a multiple of the PRACH configuration period, and the specific definition and possible values are listed in Table 2.

Table 2

| PRACH configuration period | association period |
|---|---|
| 10 | {1,2,4,8,16} |
| 20 | {1,2,4,8} |
| 40 | {1,2,4} |
| 80 | {1,2} |
| 160 | {1} |

An association period starts from system frame 0, and the duration thereof is as shown in Table 2, which is an integral multiple N of the PRACH configuration period and is at most 160 ms. The specific value of N is determined by the following condition:

For a particular PRACH configuration period, if a plurality of values are available for the corresponding association period, the smallest value satisfying the condition that each SSB may be mapped to at least one RO shall be selected.

It should be noted that, if there still are ROs not associated with the SSBs after one association period, these ROs cannot be used for the random access procedure.

It may be seen therefrom that when parameters related to a Random Access Channel (RACH) in the 3GPP protocol are configured, it needs to be ensured that each actually sent SSB is mapped to at least one RO.

Therefore, the impact of extending the SSB scanning period on the RO related configuration is as follows:

From the perspective of the satellite base station, the configuration of ROs corresponding to actually sent SSBs in each SSB period is not affected. It only requires that within K different SSB periods, beams with the same SSB index point to different directions in different SSB periods. This only affects base station implementation without affecting the parameters related to the SSB-RO time-frequency domain mapping rule in the protocol, thus requiring no parameter extension.

IV. Impact on paging

In 5G NR, the terminal device only needs to wake up at a fixed time to receive paging messages, and may sleep in the rest of the time to reduce power consumption. The entire wake-up period is referred to as a Discontinuous Reception (DRX) cycle (DRX cycle). There are N Paging Frames (PF) in one DRX cycle, and one PF corresponds to Ns Paging Occasions (PO). The terminal device wakes up only once in one DRX cycle and monitors a certain PO to receive a paging message.

The PF is a radio frame that may contain one or more POs or the starting frame of the PO. In a DRX cycle, the starting radio frame (SFN) of a paging frame corresponding to the terminal device is determined by means of the following formula (3), and the corresponding paging occasion is determined by means of the following formula (4):

SFN of PF:

$$(SFN + PF\_offset) \bmod T = (T \ \mathrm{div}\ N) * (UE\_ID \bmod N) \quad (3)$$

index (i_s) of PO:

$$i\_s = \mathrm{floor}\ (UE\_ID/N) \bmod Ns \quad (4)$$

wherein T is a DRX cycle of the terminal device, i.e. DRX cycle; N is the total number of PFs in one DRX cycle; Ns is the number of POs in one PF; PF_offset is used for determining an offset of PF; UE_ID is a terminal device identifier, which may be obtained by means of 5G-S-TMSI mod 4096 if the terminal device runs in eDRX, otherwise is equal to 5G-S-TMSI mod 1024 (TMSI refers to a temporary mobile subscriber identifier of the terminal device, and may be used for uniquely distinguishing different terminal devices). The described parameters may be acquired according to the paging configuration PCCH-Config in 38.331, specifically:

the value of the paging period T is derived from parameter defaultPagingCycle, and the paging period may be configured as 32, 64, 128, or 256 radio frames in units of radio frames (i.e. 10 ms); the value of N and PF_offset is derived from parameter nAndPagingFrameOffset, for example, when T is configured as 64 radio frames, if the value of N is halfT, it means that there are 32 paging frames in a DRX cycle of 640 ms, there is one paging frame in every two radio frames, and the offset of the radio frames is determined by taking the value of PF_offset as 0 or 1; the value of Ns is derived from parameter ns, and may be 1, 2, or 4. For a certain terminal device, the system frame number (SFN) for paging message reception may be specified upon obtaining the PF by calculation, then i_s is obtained by calculation, thus the terminal device monitors the paging message in the (i_s+1)$^{th}$ PO in the paging frame.

Multi-beam operations are used in NR. It may be determined according to the definition of TS 38.304 that PO is a group of Physical Downlink Control Channel (PDCCH) Monitoring Occasions (MO), which may comprise a plurality of slots (such as sub-frames or OFDM symbols), where paging DCI may be sent in these occasions (see TS 38.213). Different monitoring occasions correspond to different transmission beams, the same paging message and the same short message are repeated in all the transmission beams, and the implementation at the terminal device side decides which beam is selected to receive the paging message and the short message. The time-domain resources for PDCCH MO are indicated by pagingSearchSpace specified in TS 38.213 (combined with the CORESET corresponding to this searchspace, the time-frequency resources for reception of PDCCH scrambled by P-RNTI can be specifically determined).

In the existing 3GPP protocol, an SSB period is smaller than a DRX paging period, and a paging occasion of a certain terminal device in the DRX paging period may be dynamically adjusted by configuring the number of paging frames in the paging period and the number of paging occasions in each paging frame. When the user quantity is large, the satellite base station side may improve the efficiency by configuring more paging frames. In 38.331, when SearchSpaceId of pagingSearchSpace is set to zero and non-zero, the value of N in the information element nAndPagingFrameOffset is clearly defined.

After the SSB scanning period is extended, from the perspective of the terminal device, it is equivalent to that the SSB scanning period is extended to be "K*ssb-periodicityServingCell". Every K paging frames are defined herein as a paging frame group. When the radio frame of the paging frame group where the terminal device is located is calculated by means of formula (3), the value of N should be updated correspondingly by means of the following formula (5) to be $N_{update}$.

$$N_{update} = \frac{N}{K} \qquad (5)$$

After updating, $N_{update}$ is substituted into formula (3) (replacing N in formula (3)) to determine SFN of the starting radio frame of the paging frame group where the terminal device is located. Due to extension of the scanning period, each paging frame group comprises K paging frames, so as to ensure that each paging frame group has sufficient downlink time-domain resources to schedule monitoring occasions corresponding to all actually sent SSBs in K SSB periods. After the paging frame group is determined, the time domain positions of the PDCCH MOs corresponding to the terminal device are configured, which may be defined in the following two implementations.

Implementation I: paging frame grouping

Specifically, in paging configuration parameters, K paging frames are configured as a paging frame group, wherein each paging frame of the K paging frames corresponds to at least one paging occasion, the number of monitoring occasions (MOs) configured in each paging occasion is the same as the number of SSB beams contained in one single SSB set, and the MOs correspond to the SSB beams on a one-to-one basis.

In practical applications, there is only one SSB beam pointing to the beam footprint where the terminal device is located, which corresponds to the l$^{th}$ SSB beam in the k$^{th}$ SSB period, where k $\in$ [1, ... , K], l $\in$ [1, ..., $L_{max}$], k and l are both natural numbers.

After the paging frame group where the terminal device is located is determined, the paging frame of the terminal device should correspond to the k$^{th}$ paging frame in the current paging frame group, and the radio frame position thereof may be calculated by means of the following formula (6):

$$SFN_K = SFN + k \times \frac{T}{N_{update} \times K} \qquad (6)$$

The ns POs may be configured in the k$^{th}$ paging frame, where the definition of the ns and PO is consistent with the existing protocol.

In an example, as shown in Fig. 4, N=T/2; PF_offset=1; K=2; Nupdate=T/4; SSB period of 20 ms; SCS=30 KHz. After the SSB period is extended by the SSB extension method provided in the embodiments of the present disclosure, 2 paging frames form one paging frame group, each paging frame corresponds to 1 paging occasion, and when the number of SSBs actually sent in each SSB period is 6, then 6 MOs are configured in each PO, and the MOs are mapped to different SSBs respectively.

It should be noted that, in the example shown in Fig. 4, one paging occasion is configured in each paging frame. In practical applications, ns paging occasions may be configured in each paging frame. The definition of ns is consistent with the existing protocol, and the value of ns may be 1, 2, or 4.

In this implementation, corresponding paging opportunities for terminal devices at beam footprints corresponding to all SSBs in K SSB periods are evenly allocated by grouping paging frames. From the perspective of a certain terminal device, it only needs to pay attention to the PDCCH MO corresponding to the $I^{th}$ SSB in the paging occasion corresponding to the $k^{th}$ paging frame in the paging frame group where the terminal device itself is located. The manner of paging frame grouping does not require change of the definition of PO in the existing protocol.

Implementation II: extending the number of MOs corresponding to PO

Specifically, in paging configuration parameters, each wakeup period is configured with $N_{update}$ paging frames, wherein each of the paging frames corresponds to one paging occasion, each paging occasion (PO) comprises K search spaces, the number of MOs configured in each of the search spaces is the same as the number of SSB beams contained in one single SSB set, and an $(x*S+M)^{th}$ physical downlink control channel (PDCCH) MO for paging located in a $k^{th}$ search space in one PO corresponds to an $M^{th}$ transmitted SSB;
wherein k represents a position where an SSB beam corresponding to a terminal device is located in the K SSB sets, X is the number of MOs mapped to one SSB, x is a natural number between [0, X-1], S is the number of SSB beams contained in one SSB set, and M is a natural number between [1, S].

In this implementation, the concept of a paging frame group is not defined, and SFN of the starting radio frame of the paging frame where the terminal device is located is determined by means of formula (5) and formula (3). For the convenience of configuration, it is defined that there is only one PO (ns=1) in the paging frame, but the PO includes PDCCH MOs corresponding to all the SSBs actually sent in K SSB periods, and the PO may span a plurality of SearchSpace periods.

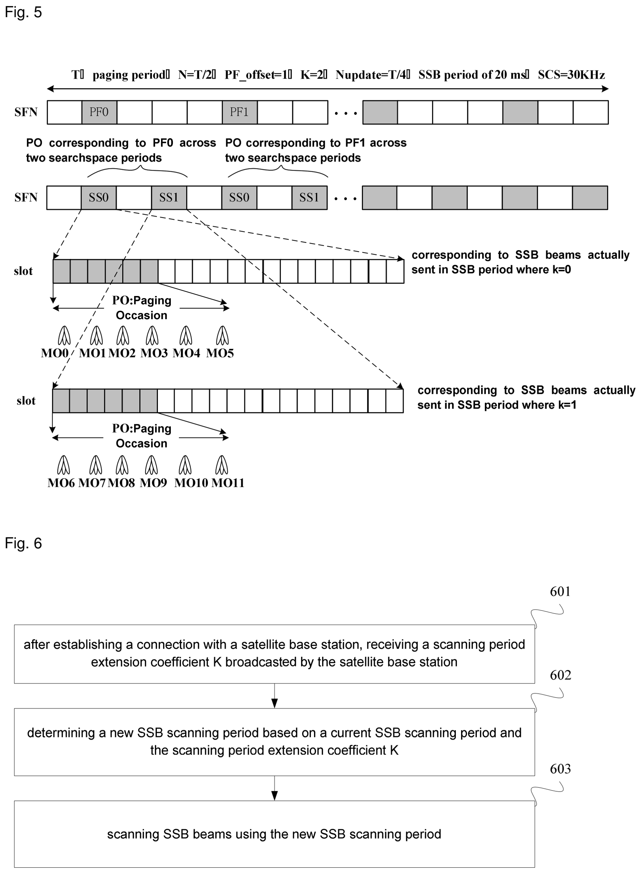

In an example, as shown in Fig. 5, N=T/2; PF_offset=1; K=2; Nupdate=T/4; SSB period of 20 ms; SCS=30 KHz. After the SSB period is extended by the method for extending an SSB provided in the embodiments of the present disclosure, T/4 paging frames are configured, each paging frame corresponds to 1 paging occasion, and each paging occasion comprises 2 search spaces, i.e. search space SS0 and search space SS1 shown in the Fig. 5. When the number of SSBs actually sent in each SSB period is 6, then 12 MOs are configured in each PO, 6 MOs are configured in each search space, and the MOs are mapped to SSBs in different SSB sets respectively.

Specifically, after the SSB scanning period is extended, the terminal devices at the beam footprints corresponding to all the SSB beams actually sent in K SSB periods should have corresponding monitoring occasions. That is to say, the number of monitoring occasions in a paging occasion (PO) is extended from "S*X" (the number of MOs in a PO is explicitly defined in Chapter 7.1 of 38.304) defined in the existing protocol to "K*S*X", wherein for the definition of S and X and the parameters derived therefrom, please refer to the protocol 38.304.

From the perspective of resource scheduling, it should be ensured that "K*S*X" MOs are evenly distributed in K SSB periods, instead of occupying consecutive slot resources, especially when the value of K is relatively large. Therefore, after the SSB scanning period is extended, it is more suitable to set SearchSpaceId of pagingSearchSpace to be non-zero. It is explicitly indicated in NOTE2 of Chapter 7.1 of 38.304 that when SearchSpaceId of pagingSearchSpace is set to be non-zero, PDCCH MOs in a PO may span a plurality of SearchSpace periods, thereby ensuring the even distribution of "K*S*X" MOs in the paging frame (across K SSB periods or more).

"The $[x*S+M]^{th}$ PDCCH MO for paging of the PO corresponds to the $M^{th}$ transmitted SSB, where x=0, 1, ..., X-1, and M=1, 2, ..., S" defined in the existing protocol 38.304 should be updated to be "when K is greater than 1, i.e. when there is an extended scanning period, the $[x*S+M]^{th}$ PDCCH MO located in the $k^{th}$ SearchSpace period for paging of the PO corresponds to the $M^{th}$ transmitted SSB, where x=0, 1, ..., X-1, and M=1, 2, ..., S".

In Implementation II, ns needs to be set to 1 during parameter configuration. When the number is extended to "K*S*X", the time domain resources are rather insufficient. Setting ns to 1 facilitates parameter configuration corresponding to SearchSpace. The SearchSpaceId of pagingSearchSpace is set to non-zero. The SearchSpace period may be configured to be the SSB period or an integral multiple of the SSB period, so as to ensure that the "K*S*X" MOs are evenly distributed in a plurality of SSB periods. The $k^{th}$ SearchSpace period contains "S*X" PDCCH MOs to correspond to the $K^{th}$ transmitted SSB in the $k^{th}$ SSB period.

It should be noted that, no matter in Implementation I or Implementation II, when K is greater than 1, both the satellite base station and the terminal device need to ensure: when nAndPagingFrameOffset is configured, it should be ensured that $N_{update}$ is greater than or equal to 1, that is, it is ensured that for an extended scanning period, there is at least one paging frame in one paging period. For example, when K is equal to 2, the value of N should be half of that when K is equal to 1, so as to ensure that there is at least one paging frame in one paging period.

The method for extending an SSB at the satellite base station side provided in the embodiments of the present disclosure and the impact on relevant flows after the SSB period is extended have been described above. The following describes, with reference to Fig. 6, the corresponding implementation flows of the method for extending an SSB provided in the embodiments of the present disclosure at a terminal device side.

As shown in Fig. 6, an embodiment of the present disclosure provides a method for extending a synchronization signal block (SSB), which is applied to a terminal device. The method comprises:

Step 601: after establishing a connection with a satellite base station, receiving a scanning period extension coefficient K broadcasted by the satellite base station.

Step 602: determining a new SSB scanning period based on a current SSB scanning period and the scanning period extension coefficient K.

Step 603: scanning SSB beams using the new SSB scanning period.

During specific implementation, receiving a scanning period extension coefficient K broadcasted by the satellite base station comprises:
receiving the scanning period extension coefficient K broadcasted by the satellite base station via an SIB1 message or a RRC reconfiguration message.

In practical applications, before a terminal device establishes a connection with the satellite base station, the terminal device needs to determine a target SSB scanning period based on a pre-configured target scanning period extension coefficient and an initial SSB scanning period, and scans and searches for SSB beams using the target SSB scanning period to determine an initial SSB.

The target scanning period extension coefficient is a maximum value within at least one pre-configured scanning period extension coefficient. For example, if the pre-configured scanning period extension coefficient includes 4, 8, 16, or 32, the target scanning period extension coefficient is 32. Definitely, in other embodiments of the present disclosure, other scanning period extension coefficients may also be taken as the target scanning period extension coefficient.

Before a connection is established with the satellite base station, that is, before the terminal device receives an SIB1 message broadcasted by the satellite base station, the SSB scanning period of the terminal device is a pre-configured initial SSB scanning period, for example, the initial SSB scanning period is 20 ms.

After a connection is established with the satellite base station, that is, after the terminal device receives an SIB1 message broadcasted by the satellite base station, the SSB scanning period of the terminal device is determined according to an SIB1 message or a RRC reconfiguration message broadcasted by the satellite base station.

In practical applications, the terminal device further receives paging configuration parameters broadcasted by the satellite base station via an SIB1 message or a RRC reconfiguration message.

According to different methods for configuring time domain positions of PDCCH MOs at the satellite base station side, the terminal device may determine MOs according to paging configuration parameters in two implementations, specifically:

Implementation I: the satellite base station configures MOs by paging frame grouping

Based on the paging configuration parameters, a system frame number (SFN) of a starting radio frame of a paging frame group where the terminal device is located is determined by means of formula (7), wherein a paging frame of the terminal device corresponds to a $k^{th}$ paging frame in the paging frame group, the position of the $k^{th}$ paging frame is determined by means of formula (8), and an MO of the terminal device is a PDCCH MO corresponding to an $l^{th}$ SSB in a paging occasion corresponding to the $k^{th}$ paging frame;

$$(SFN + PF\_offset) \bmod T = (T \ div \ N_{update}) \times (UE\_ID \bmod N_{update}) \qquad (7)$$

$$SFN_k = SFN + k \times \frac{T}{N_{update} \times K} \qquad (8)$$

wherein T is a wakeup period of the terminal device, $N_{update} = \frac{N}{K}$, N is the total number of paging frames in one pre-configured wakeup period, K is a scanning period extension coefficient, k represents a position where an SSB beam corresponding to the terminal device is located in K SSB sets, UE_ID is an identity identifier of the terminal device, *PF_offset* is an offset of a paging frame (PF), and l represents a position where an SSB beam corresponding to the terminal device is located in a kth SSB set.

Implementation II: the satellite base station configures MOs by extending the number of MOs corresponding to a PO.

Based on the paging configuration parameters, a SFN of a starting radio frame of a paging frame where the terminal device is located is determined by means of formula (7), wherein an MO of the terminal device is a PDCCH MO corresponding to an $I^{th}$ SSB in a $k^{th}$ search space.

Wherein, k represents a position where an SSB beam corresponding to the terminal device is located in K SSB sets, and I represents a position where an SSB beam corresponding to the terminal device is located in a $k^{th}$ SSB set.

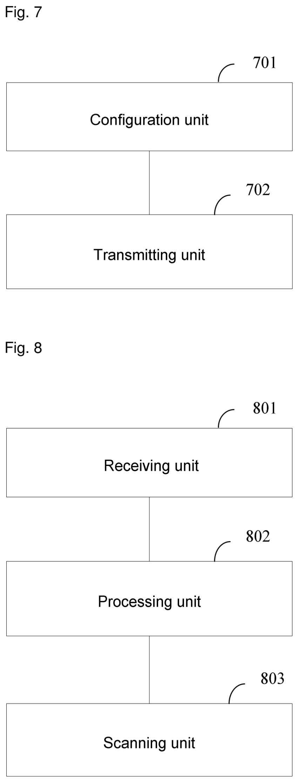

Based on the same inventive concept, as shown in Fig. 7, an embodiment of the present disclosure further provides an apparatus for extending a synchronization signal block (SSB), which is applied to a satellite base station. The apparatus comprises:

a configuration unit 701, configured to, when the number of beam footprints that the satellite base station needs to serve is greater than the number of SSB beams sent in each SSB period, send SSB beams to a current cell using K SSB sets, wherein the sum of the SSB beams contained in the K SSB sets is greater than the number of the beam footprints, and K is a natural number greater than 1; and

a transmitting unit 702, configured to transmit the K SSB sets to the current cell, wherein beams with the same index in different SSB sets point to different beam footprints.

As an exemplary implementation, each SSB set of the K SSB sets contains a same number of SSB beams.

As an exemplary implementation, the transmitting unit 702 is further configured to:
broadcast the K as a scanning period extension coefficient to a terminal device.

As an exemplary implementation, the transmitting unit 702 is specifically configured to:
broadcast the K as the scanning period extension coefficient to the terminal device via a system message SIB1 or a radio resource control (RRC) reconfiguration message.

As an exemplary implementation, the configuration unit 701 is further configured to:
when a multiplexing pattern between the synchronization signal block and a control resource set CORESETO is configured as multiplexing pattern 1, configure an SSB scanning period to be greater than or equal to 20 milliseconds.

As an exemplary implementation, the transmitting unit 702 is further configured to:
broadcast the configured SSB scanning period to a terminal device via an SIB1 message or a RRC reconfiguration message.

As an exemplary implementation, the configuration unit 701 is further configured to:
in paging configuration parameters, K paging frames are configured as a paging frame group, wherein each paging frame of the K paging frames corresponds to at least one paging occasion, the number of monitoring occasions (MO) configured in each paging occasion is the same as the number of SSB beams contained in one single SSB set, and the MOs correspond to the SSB beams on a one-to-one basis.

As an exemplary implementation, the configuration unit 701 is further configured to:

in paging configuration parameters, configure each wakeup period with $N_{update}$ paging frames, wherein each of the paging frames corresponds to one paging occasion, each paging occasion (PO) comprises K search spaces, the number of MOs configured in each of search spaces is the same as the number of SSB beams contained in one single SSB set, and an $(x*S+M)^{th}$ physical downlink control channel (PDCCH) MO for paging located in a $k^{th}$ search space in each PO corresponds to an $M^{th}$ transmitted SSB;

wherein $N_{update} = \frac{N}{K}$, N is the total number of paging frames in one pre-configured wakeup period, k represents a position where an SSB beam corresponding to a terminal device is located in the K SSB sets, X is the number of MOs mapped to one SSB, x is a natural number between [0, X-1], S is the number of SSB beams contained in one SSB set, and M is a natural number between [1, S].

As an exemplary implementation, the transmitting unit 702 is further configured to:
broadcast the paging configuration parameters to the terminal device via an SIB1 message or a RRC reconfiguration message.

On the basis of the same inventive concept, as shown in Fig. 8, an embodiment of the present disclosure further provides an apparatus for extending a synchronization signal block (SSB), which is applied to a terminal device. The apparatus comprises:

a receiving unit 801, configured to, after establishing a connection with a satellite base station, receive a scanning period extension coefficient K broadcasted by the satellite base station;

a processing unit 802, configured to determine a new SSB scanning period based on a current SSB scanning period and the scanning period extension coefficient K; and

a scanning unit 803, configured to scan SSB beams using the new SSB scanning period.

As an exemplary implementation, the receiving unit 801 is specifically configured to:
receive the scanning period extension coefficient K broadcasted by the satellite base station via an SIB1 message or a RRC reconfiguration message.

As an exemplary implementation, the processing unit 802 is further configured to:

before establishing the connection with the satellite base station, determine a target SSB scanning period based on a pre-configured target scanning period extension coefficient and an initial SSB scanning period; and

the scanning unit 803 is further configured to scan SSB beams using the target SSB scanning period to determine an initial SSB.

As an exemplary implementation, the target scanning period extension coefficient is a maximum value within at least one pre-configured scanning period extension coefficient.

As an exemplary implementation, the current SSB scanning period is determined according to an SIB1 message or a RRC reconfiguration message broadcasted by the satellite base station.

As an exemplary implementation, the receiving unit 801 is further configured to:
receive paging configuration parameters broadcasted by the satellite base station via an SIB1 message or a RRC reconfiguration message.

As an exemplary implementation, the processing unit 802 is further configured to:

based on the paging configuration parameters, determine a system frame number (SFN) of a starting radio frame of a paging frame group where the terminal device is located by means of formula I, wherein a paging frame of the terminal device corresponds to a $k^{th}$ paging frame in the paging frame group, the position of the $k^{th}$ paging frame is determined by means of formula II, and an MO of the terminal device is a PDCCH MO corresponding to an $I^{th}$ SSB in a paging occasion corresponding to the $k^{th}$ paging frame;

$$(SFN + PF\_offset) \bmod T = \left(T \; div \; N_{update}\right) \times \left(UE\_ID \bmod N_{update}\right) \qquad \text{formula I}$$

$$SFN_k = SFN + k \times \frac{T}{N_{update} \times K} \qquad \text{formula II}$$

wherein T is a wakeup period of the terminal device, $N_{update} = \frac{N}{K'}$, N is the total number of paging frames in one pre-configured wakeup period, K is a scanning period extension coefficient, k represents a position where an SSB beam corresponding to the terminal device is located in K SSB sets, UE_ID is an identity identifier of the terminal device, *PF_offset* is an offset of a paging frame (PF), and I represents a position where an SSB beam corresponding to the terminal device is located in a $k^{th}$ SSB set.

As an exemplary implementation, the processing unit 802 is further configured to:

based on the paging configuration parameters, determine a SFN of a starting radio frame of a paging frame where the terminal device is located by means of formula III, wherein an MO of the terminal device is a PDCCH MO corresponding to an $I^{th}$ SSB in a $k^{th}$ search space:

$$(SFN + PF\_offset) \bmod T = \left(T \; div \; N_{update}\right) \times \left(UE\_ID \bmod N_{update}\right) \qquad \text{formula III}$$

wherein T is a wakeup period of the terminal device, $N_{update} = \frac{N}{K}$, N is the total number of paging frames in one pre-configured wakeup period, K is a scanning period extension coefficient, k represents a position where an SSB beam corresponding to the terminal device is located in K SSB sets, UE_ID is an identity identifier of the terminal device, *PF_offset* is an offset of a paging frame (PF), and I represents a position where an SSB beam corresponding to the terminal device is located in a $k^{th}$ SSB set.

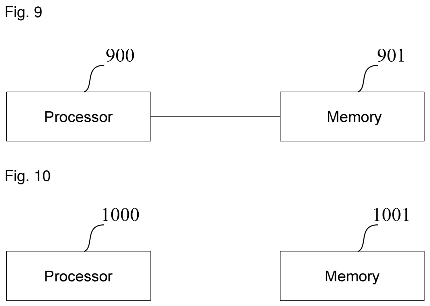

On the basis of the same inventive concept, as shown in Fig. 9, an embodiment of the present disclosure further provides a device for extending a synchronization signal block (SSB) at a satellite base station. The device comprises a processor 900 and a memory 901, wherein the memory 901 is configured to store a program executable by the processor 900, and the processor 900 is configured to read the program in the memory 901 and execute the steps of:

when the number of beam footprints that the satellite base station needs to serve is greater than the number of SSB beams sent in each SSB period, sending SSB beams to a current cell using K SSB sets, wherein the sum of the SSB beams contained in the K SSB sets is greater than the number of the beam footprints, and K is a natural number greater than 1; and

transmitting the K SSB sets to the current cell, wherein beams with the same index in different SSB sets point to different beam footprints.

As an exemplary implementation, each SSB set of the K SSB sets contains a same number of SSB beams.
As an exemplary implementation, the processor 900 is further configured to:
broadcast the K as a scanning period extension coefficient to a terminal device.
As an exemplary implementation, the processor 900 is specifically configured to:
broadcast the K as the scanning period extension coefficient to the terminal device via a system message SIB1 or a radio resource control (RRC) reconfiguration message.
As an exemplary implementation, the processor 900 is further configured to:
when a multiplexing pattern between the synchronization signal block and a control resource set CORESETO is configured as multiplexing pattern 1, configure an SSB scanning period to be greater than or equal to 20 milliseconds.
As an exemplary implementation, the processor 900 is further configured to:
broadcast the configured SSB scanning period to a terminal device via an SIB1 message or a RRC reconfiguration message.
As an exemplary implementation, the processor 900 is further configured to:
in paging configuration parameters, K paging frames are configured as a paging frame group, wherein each paging frame of the K paging frames are corresponds to at least one paging occasion, the number of monitoring occasions (MOs) configured in each paging occasion is the same as the number of SSB beams contained in one single SSB set, and the MOs correspond to the SSB beams on a one-to-one basis.
As an exemplary implementation, the processor 900 is further configured to:

in paging configuration parameters, configure each wakeup period with $N_{update}$ paging frames, wherein each of the paging frames corresponds to one paging occasion, each paging occasion (PO) comprises K search spaces, the number of MOs configured in each of search spaces is the same as the number of SSB beams contained in one single SSB set, and an $(x*S+M)^{th}$ physical downlink control channel (PDCCH) MO for paging located in a $k^{th}$ search space in one PO corresponds to an $M^{th}$ transmitted SSB;

wherein $N_{update} = \frac{N}{K}$, N is the total number of paging frames in one pre-configured wakeup period, k represents a position where an SSB beam corresponding to a terminal device is located in the K SSB sets, X is the number of MOs mapped to one SSB, x is a natural number between [0, X-1], S is the number of SSB beams contained in one SSB set, and M is a natural number between [1, S].

As an exemplary implementation, the processor 900 is further configured to:
broadcast the paging configuration parameters to the terminal device via an SIB1 message or a RRC reconfiguration message.
On the basis of the same inventive concept, as shown in Fig. 10, an embodiment of the present disclosure further provides a device for extending a synchronization signal block (SSB) at a terminal device side. The device comprises a processor 1000 and a memory 1001, wherein the memory 1001 is configured to store a program executable by the processor 1000, and the processor 1000 is configured to read the program in the memory 1001 and execute the steps of:

after establishing a connection with a satellite base station, receiving a scanning period extension coefficient K broadcasted by the satellite base station;

determining a new SSB scanning period based on a current SSB scanning period and the scanning period extension coefficient K; and

scanning SSB beams using the new SSB scanning period.

As an exemplary implementation, the processor 1000 is specifically configured to:
receive the scanning period extension coefficient K broadcasted by the satellite base station via an SIB1 message or a RRC reconfiguration message.

As an exemplary implementation, the processor 1000 is further configured to:

before establishing the connection with the satellite base station, determine a target SSB scanning period based on a pre-configured target scanning period extension coefficient and an initial SSB scanning period; and

scan SSB beams using the target SSB scanning period to determine an initial SSB.

As an exemplary implementation, the target scanning period extension coefficient is a maximum value within at least one pre-configured scanning period extension coefficient.

As an exemplary implementation, the current SSB scanning period is determined according to an SIB1 message or a RRC reconfiguration message broadcasted by the satellite base station.

As an exemplary implementation, the processor 1000 is further configured to:
receive paging configuration parameters broadcasted by the satellite base station via an SIB1 message or a RRC reconfiguration message.

As an exemplary implementation, the processor 1000 is further configured to:

based on the paging configuration parameters, determine a system frame number (SFN) of a starting radio frame of a paging frame group where the terminal device is located by means of formula I, wherein a paging frame of the terminal device corresponds to a $k^{th}$ paging frame in the paging frame group, the position of the $k^{th}$ paging frame is determined by means of formula II, and an MO of the terminal device is a PDCCH MO corresponding to an $I^{th}$ SSB in a paging occasion corresponding to the $k^{th}$ paging frame;

$$(SFN + PF\_offset) \bmod T = (T \ div \ N_{update}) \times (UE\_ID \bmod N_{update}) \qquad \text{formula I}$$

$$SFN_k = SFN + k \times \frac{T}{N_{update} \times K} \qquad \text{formula II}$$

wherein T is a wakeup period of the terminal device, $N_{update} = \frac{N}{K}$, N is the total number of paging frames in one pre-configured wakeup period, K is a scanning period extension coefficient, k represents a position where an SSB beam corresponding to the terminal device is located in K SSB sets, UE_ID is an identity identifier of the terminal device, *PF_offset* is an offset of a paging frame (PF), and I represents a position where an SSB beam corresponding to the terminal device is located in a $k^{th}$ SSB set.

As an exemplary implementation, the processor 1000 is further configured to:

based on the paging configuration parameters, determine a SFN of a starting radio frame of a paging frame where the terminal device is located by means of formula III, wherein an MO of the terminal device is a PDCCH MO corresponding to an $I^{th}$ SSB in a $k^{th}$ search space:

$$(SFN + PF\_offset) \bmod T = (T \ div \ N_{update}) \times (UE\_ID \bmod N_{update}) \qquad \text{formula III}$$

wherein T is a wakeup period of the terminal device, $N_{update} = \frac{N}{K}$, N is the total number of paging frames in one pre-configured wakeup period, K is a scanning period extension coefficient, k represents a position where an SSB beam corresponding to the terminal device is located in K SSB sets, UE_ID is an identity identifier of the terminal device, *PF_offset* is an offset of a paging frame (PF), and I represents a position where an SSB beam corresponding to the terminal device is located in a $k^{th}$ SSB set.

On the basis of the same inventive concept, an embodiment of the present disclosure provides a computer storage medium. The computer storage medium comprises: a computer program code, wherein when the computer program code runs on a computer, the computer is enabled to execute the method for extending a synchronization signal block (SSB) according to any one of the embodiments discussed above. As the computer storage medium solves the problem under a similar principle to the method for extending a synchronous signal block (SSB), the implementation of the computer storage medium may refer to the implementation of the method, and details are not repeatedly described herein.

In a specific implementation process, the computer storage medium may include: any storage medium capable of storing program codes, such as a Universal Serial Bus (USB) Flash Drive, a mobile hard disk, a Read-Only Memory (ROM), a Random Access Memory (RAM), a magnetic disk, or an optical disk.

On the basis of the same inventive concept, an embodiment of the present disclosure further provides a computer program product. The computer program product comprises: a computer program code, wherein when the computer program code runs on a computer, the computer is enabled to execute the method for extending a synchronization signal block (SSB) according to any one of the embodiments discussed above. As the computer program product solves the problem under a similar principle to the method for extending a synchronous signal block (SSB), the implementation of the computer program product may refer to the implementation of the method, and details are not repeatedly described herein.

The computer program product may be any combination of one or more readable media. The readable medium may be a readable signal medium or a readable storage medium. A readable storage medium may be, for example, but not limited to, an electronic, magnetic, optical, electromagnetic, infrared, or semiconductor system, apparatus, or device, or any combination of the foregoing. More specific examples (a non-exhaustive list) of the readable storage medium include: electrical connection having one or more wires, a portable disk, a hard disk, a Random Access Memory (RAM), a Read-Only Memory (ROM), an Erasable Programmable Read-Only Memory (EPROM or flash memory), an optical fiber, a portable Compact Disc Read-Only Memory (CD-ROM), an optical storage device, a magnetic storage device, or any suitable combination of the foregoing.

Those skilled in the art shall understand that the embodiments of the present disclosure may be provided as a method, a system or a computer program product. Therefore, the present disclosure may take the form of an entirely hardware embodiment, an entirely software embodiment or an embodiment combining software and hardware aspects. Furthermore, the present disclosure may take the form of a computer program product implemented on one or more computer-usable storage media (including but not limited to a disk memory, an optical memory, and the like) containing computer-usable program codes.

The present disclosure is described with reference to the flowcharts and/or block diagrams of the method, device (system), and computer program product according to the embodiments of the present disclosure. It should be understood that each flow and/or block in the flowcharts and/or block diagrams and combinations of flows and/or blocks in the flowcharts and/or block diagrams can be implemented by computer program instructions. These computer program instructions may be provided to a processor of a general purpose computer, a special purpose computer, an embedded processor or other programmable data processing device to produce a machine, such that the instructions executed by the processor of the computer or other programmable data processing device generate a means for implementing the functions specified in one or more flows in the flowcharts and/or one or more blocks in the block diagrams.

These computer program instructions may also be stored in a computer readable memory capable of guiding a computer or other programmable data processing device to work in a specific manner, such that the instructions stored in the computer readable memory generate a manufactured product comprising an instruction device, and the instruction device implements the functions specified in one or more flows in the flowcharts and/or one or more blocks in the block diagrams.

These computer program instructions may also be loaded onto a computer or other programmable data processing device, causing a series of operational steps to be performed on the computer or other programmable device to produce computer implemented processing, such that the instructions executed on the computer or other programmable device provide steps for implementing the functions specified in one or more flows in the flowcharts and/or one or more blocks in the block diagrams.

Obviously, those skilled in the art may make various modifications and variations to the present disclosure without departing from the spirit and scope of the present disclosure. As such, if these modifications and variations of the present disclosure belong to the scope of the claims of the present disclosure and their equivalents, the present disclosure is intended to include these modifications and variations.

**Claims**

1. A method for extending a synchronization signal block (SSB), applied to a satellite base station, the method comprising:

when the number of beam footprints that the satellite base station needs to serve is greater than the number of SSB beams sent in each SSB period, sending SSB beams to a current cell using K SSB sets, wherein the sum of the SSB beams contained in the K SSB sets is greater than the number of the beam footprints, and K is a natural number greater than 1; and

transmitting the K SSB sets to the current cell, wherein beams with a same index in different SSB sets point to different beam footprints.

2. The method according to claim 1, wherein each SSB set of the K SSB sets contains a same number of SSB beams.

3. The method according to claim 1, wherein the method further comprises:
broadcasting the K as a scanning period extension coefficient to a terminal device.

4. The method according to claim 3, wherein the broadcasting the K as a scanning period extension coefficient to a terminal device comprises:
broadcasting the K as the scanning period extension coefficient to the terminal device via a system message SIB1 or a radio resource control (RRC) reconfiguration message.

5. The method according to claim 1, wherein the method further comprises:
when a multiplexing pattern between the SSB and a control resource set CORESET0 is configured as multiplexing pattern 1, configuring an SSB scanning period to be greater than or equal to 20 milliseconds.

6. The method according to claim 5, wherein the method further comprises:
broadcasting the configured SSB scanning period to a terminal device via an SIB1 message or a RRC reconfiguration message.

7. The method according to claim 1, wherein in paging configuration parameters, K paging frames are configured as a paging frame group, wherein each paging frame of the K paging frames corresponds to at least one paging occasion, the number of monitoring occasions (MOs) configured in each paging occasion is the same as the number of SSB beams contained in one single SSB set, and the MOs correspond to the SSB beams on a one-to-one basis.

8. The method according to claim 1, wherein the method further comprises:

in paging configuration parameters, configuring each wakeup period with $N_{update}$ paging frames, wherein each of the paging frames corresponds to one paging occasion, each paging occasion (PO) comprises K search spaces, the number of MOs configured in each of the search spaces is the same as the number of SSB beams contained in one single SSB set, and an $(x*S+M)^{th}$ physical downlink control channel (PDCCH) MO for paging located in a $k^{th}$ search space in one PO corresponds to an $M^{th}$ transmitted SSB;

wherein $N_{update} = \frac{N}{K}$, N is the total number of paging frames in one pre-configured wakeup period, k represents a position where an SSB beam corresponding to a terminal device is located in the K SSB sets, X is the number of MOs mapped to one SSB, x is a natural number between [0, X-1], S is the number of SSB beams contained in one SSB set, and M is a natural number between [1, S].

9. The method according to claim 7 or 8, wherein the method further comprises:
broadcasting the paging configuration parameters to the terminal device via an SIB1 message or a RRC reconfiguration message.

10. A method for extending a synchronization signal block (SSB), applied to a terminal device, the method comprising:

after establishing a connection with a satellite base station, receiving a scanning period extension coefficient K broadcasted by the satellite base station;
determining a new SSB scanning period based on a current SSB scanning period and the scanning period extension coefficient K; and
scanning SSB beams using the new SSB scanning period.

11. The method according to claim 10, wherein the receiving a scanning period extension coefficient K broadcasted by the satellite base station comprises:

receiving the scanning period extension coefficient K broadcasted by the satellite base station via an SIB1 message or a RRC reconfiguration message.

12. The method according to claim 10, wherein the method further comprises:

before establishing the connection with the satellite base station, determining a target SSB scanning period based on a target scanning period extension coefficient and an initial SSB scanning period; and scanning SSB beams using the target SSB scanning period to determine an initial SSB.

13. The method according to claim 12, wherein the target scanning period extension coefficient is a maximum value within at least one pre-configured scanning period extension coefficient.

14. The method according to claim 10, wherein the current SSB scanning period is determined according to an SIB1 message or a RRC reconfiguration message broadcasted by the satellite base station.

15. The method according to claim 10, wherein the method further comprises:
receiving paging configuration parameters broadcasted by the satellite base station via an SIB1 message or a RRC reconfiguration message.

16. The method according to claim 15, wherein the method further comprises:

based on the paging configuration parameters, determining a system frame number (SFN) of a starting radio frame of a paging frame group where the terminal device is located by means of formula I, wherein a paging frame of the terminal device corresponds to a $k^{th}$ paging frame in the paging frame group, the position of the $k^{th}$ paging frame is determined by means of formula II, and an MO of the terminal device is a PDCCH MO corresponding to an $I^{th}$ SSB in a paging occasion corresponding to the $k^{th}$ paging frame;

$$(SFN + PF\_offset) \bmod T = \left(T \; div \; N_{update}\right) \times \left(UE\_ID \bmod N_{update}\right) \qquad \text{formula I}$$

$$SFN_k = SFN + k \times \frac{T}{N_{update} \times K} \qquad \text{formula II}$$

wherein T is a wakeup period of the terminal device, $N_{update} = \frac{N}{K}$, N is the total number of paging frames in one pre-configured wakeup period, K is a scanning period extension coefficient, k represents a position where an SSB beam corresponding to the terminal device is located in K SSB sets, UE_ID is an identity identifier of the terminal device, *PF_offset* is an offset of a paging frame (PF), and I represents a the position where an SSB beam corresponding to the terminal device is located in a $k^{th}$ SSB set.

17. The method according to claim 15, wherein the method further comprises:

based on the paging configuration parameters, determining a SFN of a starting radio frame of a paging frame where the terminal device is located by means of formula III, wherein an MO of the terminal device is a PDCCH MO corresponding to an $I^{th}$ SSB in a $k^{th}$ search space:

$$(SFN + PF\_offset) \bmod T = \left(T \; div \; N_{update}\right) \times \left(UE\_ID \bmod N_{update}\right) \qquad \text{formula III}$$

wherein T is a wakeup period of the terminal device, $N_{update} = \frac{N}{K'}$, N is the total number of paging frames in one pre-configured wakeup period, K is a scanning period extension coefficient, k represents a position where an SSB beam corresponding to the terminal device is located in K SSB sets, UE_ID is an identity identifier of the terminal device, *PF_offset* is an offset of a paging frame (PF), and I represents a position where an SSB beam corresponding to the terminal device is located in a $k^{th}$ SSB set.

18. A device for extending a synchronization signal block (SSB), the device comprising a processor and a memory, wherein the memory is configured to store a program executable by the processor, and the processor is configured to read the program in the memory and execute the steps of the method according to any one of claims 1-17.

19. A computer storage medium, storing a computer program, wherein when the computer program is executed by a processor, the steps of the method according to any one of claims 1-17 are implemented.

20. A computer program product, the computer program product comprising: a computer program code, wherein the steps of the method according to any one of claims 1-17 are executed by a computer when the computer program code runs on the computer.

Fig. 1

k=0    k=1    k=2    k=3    k=4    k=5    k=6    k=7

Fig. 2

201

When the number of beam footprints that the satellite base station needs to serve is greater than the number of SSB beams sent in each SSB period, sending SSB beams to a current cell using K SSB sets, wherein the sum of the SSB beams contained in the K SSB sets is greater than the number of the beam footprints, and K is a natural number greater than 1

202

transmitting the K SSB sets to the current cell, wherein beams with the same index in different SSB sets point to different beam footprints.

Fig. 3

Slot

SSB3

SIB1 Coreset corresponding to
SSB3 is located in slot 13 and
slot 14

0   1   2   3   4   5   6   7   8   9   10   11   12   13   14   15

Fig. 4

**T: paging period⬜ N=T/2⬜ PF_offset=1⬜ K=2⬜ Nupdate=T/4⬜ SSB period of 20 ms⬜ SCS=30KHz**

SFN

· · ·

**Paging frame group0**   **Paging frame group1**

SFN   PF0   PF1   PF2   PF3   · · ·

slot

**corresponding to SSB beams actually
sent in SSB period where k=0**

**PO:Paging
Occasion**

MO0  MO1 MO2  MO3  MO4  MO5

slot

**corresponding to SSB beams actually
sent in SSB period where k=1**

**PO:Paging
Occasion**

MO0 MO1 MO2  MO3  MO4   MO5

Fig. 5

T（paging period） N=T/2） PF_offset=1） K=2） Nupdate=T/4） SSB period of 20 ms） SCS=30KHz

SFN | | PF0 | | | | PF1 | | | • • • | | | | | | |

PO corresponding to PF0 across two searchspace periods    PO corresponding to PF1 across two searchspace periods

SFN | | SS0 | | SS1 | | SS0 | | SS1 | • • • | | | | | | |

slot ... corresponding to SSB beams actually sent in SSB period where k=0

PO:Paging Occasion

MO0 MO1 MO2 MO3 MO4 MO5

slot ... corresponding to SSB beams actually sent in SSB period where k=1

PO:Paging Occasion

MO6 MO7 MO8 MO9 MO10 MO11

Fig. 6

601

after establishing a connection with a satellite base station, receiving a scanning period extension coefficient K broadcasted by the satellite base station

602

determining a new SSB scanning period based on a current SSB scanning period and the scanning period extension coefficient K

603

scanning SSB beams using the new SSB scanning period

Fig. 7

701

Configuration unit

702

Transmitting unit

Fig. 8

801

Receiving unit

802

Processing unit

803

Scanning unit

**EP 4 694 409 A1**

Fig. 9

Fig. 10

**29**

## INTERNATIONAL SEARCH REPORT

| International application No. |
| --- |
| **PCT/CN2024/129464** |

**A. CLASSIFICATION OF SUBJECT MATTER**

H04W56/00(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS: CNTXT; CNKI; VEN; WOTXT; USTXT; EPTXT; 3GPP: 同步信号块, 扩展, 拓展, 星载, 卫星, 波位, 数量, 数目, 周期, 波束, 集, 索引, 扫描, 搜索, 寻呼, SSB, expand, extend, satellite, quantity, number, period, beam, group, index, scan, search

**C. DOCUMENTS CONSIDERED TO BE RELEVANT**

| Category* | Citation of document, with indication, where appropriate, of the relevant passages | Relevant to claim No. |
| --- | --- | --- |
| X | CN 117177331 A (BEIJING UNIVERSITY OF POSTS AND TELECOMMUNICATIONS) 05 December 2023 (2023-12-05) description, paragraphs [0074]-[0130] | 10-20 |
| X | CN 114600397 A (QUALCOMM INC.) 07 June 2022 (2022-06-07) description, paragraphs [0030]-[0146] | 10-20 |
| A | CN 115835404 A (BAICELLS TECHNOLOGIES CO., LTD.) 21 March 2023 (2023-03-21) entire document | 1-20 |
| A | CN 115913464 A (CHINA STAR-NET INNOVATION RESEARCH INSTITUTE CO., LTD.) 04 April 2023 (2023-04-04) entire document | 1-20 |
| A | CN 116209063 A (HUAWEI TECHNOLOGIES CO., LTD.) 02 June 2023 (2023-06-02) entire document | 1-20 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **20 January 2025** | **06 February 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/129464**

| Patent document cited in search report | | | Publication date (day/month/year) | Patent family member(s) | Publication date (day/month/year) |
|---|---|---|---|---|---|
| CN | 117177331 | A | 05 December 2023 | None | |
| CN | 114600397 | A | 07 June 2022 | None | |
| CN | 115835404 | A | 21 March 2023 | None | |
| CN | 115913464 | A | 04 April 2023 | None | |
| CN | 116209063 | A | 02 June 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410447914